# EUROPEAN PATENT SPECIFICATION

(11) **EP 3 273 384 B1**
(45) Date of publication and mention of the grant of the patent: **20.03.2019**
(21) Application number: 16877501.3
(22) Date of filing: 08.11.2016
(51) Int. Cl.: G06K 9/00, H04M 1/02, G06F 1/16

(54) **MOBILE TERMINAL**
MOBILES ENDGERÄT
TERMINAL MOBILE

(30) Priority: 24.12.2015 CN 201521100005 U
(43) Date of publication of application: 24.01.2018
(73) Proprietor: Shenzhen Goodix Technology Co., Ltd., Shenzhen, Guangdong 518045 (CN)
(72) Inventor: LI, Ke, Shenzhen Guangdong 518045 (CN); PI, Bo, Shenzhen Guangdong 518045 (CN)
(74) Representative: Cameron, Stewart
(86) International application number: PCT/CN2016/105000
(87) International publication number: WO 2017/107690

(56) References cited:
- CN-A- 104 049 803
- CN-A- 104 407 751
- CN-A- 104 700 081
- CN-A- 104 966 044
- CN-A- 104 966 044
- CN-U- 205 230 013
- US-A1- 2013 108 124

## Description

The present invention relates to an electronic device and specifically, to a mobile terminal.

With the rapid development of science and technology, terminal devices, such as a cell phone or a tablet computer and the like, becomes more popular, as the terminal devices could not only be used to send and receive messages and make phone calls, but could also be used to surf the Internet, send and receive e-mails, listen to the music and play games, etc. The terminal devices are now developed from original key-pressing devices to touching devices.

Most of the present sensing identification modules are capacitive sensing identification modules of a pressing-type, the sensing identification module is exposed by drilling a hole on a glass cover plate, a metal casing or a plastic casing, so as to be contacted by a finger. However, such drilling process not only increases the fabrication difficulty, but also brings the difference in visual and tactile senses due to separate assembly of the sensing identification module, and thus the structure and appearance of the whole device as well as the user's experience are affected.

CN 104966044A has disclosed a fingerprint identification sensing apparatus, which comprises: a substrate which comprises a first surface and a second surface opposite to the first surface, wherein the first surface of the substrate is provided with a groove; a first conductor layer disposed on the bottom surface of the groove; a protective layer which is disposed in the groove and covers the first conductor layer; a second conductor layer disposed on the second surface, wherein the first conductor layer and the second conductor layer form two electrodes of a capacitor for transmitting radiofrequency signals; and a radiofrequency field induction module disposed at one side of the second surface of the substrate.

US2013/0108124 A1 has disclosed an electronic device with a fingerprint sensor within a recess or aperture, formed or molded in the housing, such that the fingerprint sensor interface is within 500 microns of an exterior surface of the device.

Therefore, a problem to be solved at present is how to lower the fabrication difficulty of whole device and reduce the difference between the sensing identification module and the casing while guaranteeing the normal use of the sensing identification module, and thus improving the appearance of the whole device and enhancing the user experience.

The purpose of some embodiments of the present invention is to provide a mobile terminal which is capable of reducing difference between the sensing identification module and the casing while the user performs a press and touch operation on an outer surface of the casing, and thus improving the appearance of the whole device and the user's experience.

To solve the technical problems mentioned above, some embodiments of the present invention provide a mobile terminal, which includes a sensing identification module and a touch area, the sensing identification module is arranged within a casing of the mobile terminal; the touch area refers to an area of an outer surface of the casing corresponding to the sensing identification module, the sensing identification module is positioned below the touch area and is not exposed outside of the casing, and at least part of the touch area is concave or convex; the touch area has an annular structure at a periphery thereof and the annular structure is an annular protrusion structure or an annular groove structure.

As compared with the prior art, the sensing identification module according to the present invention is arranged inside of the casing of the mobile terminal, and the area of the outer surface of the casing corresponding to the sensing identification module serves as the touch area, so that the sensing identification module may not be exposed to the outside circumstance of the casing; and at least part of the outer surface of the casing corresponding to the touch area is concave or convex; with this configuration, when using the mobile module, a user may quickly find out the location of the touch area on the outer surface of the casing by means of only tactile sense of the finger, which reduces the difference in visual sense and tactile sense that might otherwise exist due to separate assembly of the sensing identification module while the user performs a press and touch operation on the outer surface of the casing, and thus improves the appearance of the whole device and enhances the user's experience. In addition, since no drilling process for forming a hole on the casing to accommodate the sensing identification module is needed, the fabricating procedures of the whole device are reduced and thus the fabricating difficulty is lowered.

In some embodiments, the touch area on the casing as a whole is a first concavity, or the touch area on the casing as a whole is a convexity. By means of fabricating the touch area as a concavity or convexity, the accuracy for the user's finger pressing the touch area located on the outer surface of the casing is increased, and thus the user's experience is enhanced.

Moreover, in order to meet various use habits of different users, when the touch area on the casing as a whole is a first concavity, the first concavity is a concave plane or a concave arc surface; when the touch area on the casing as a whole is a convexity, the convexity is a convex plane or a convex arc surface.

In some embodiments, the touch area has a concave or convex annular structure at a periphery thereof, and the annular structure is an annular protrusion structure or an annular groove structure. By means of these annular structures, the accuracy for the user's finger pressing or touching the touch area on the outer surface of the casing is increased, and thus the user's experience is improved.

In addition, the annular structure is a continuous annular structure or an annular structure with breakpoint, so as to meet various use habits of different users. Moreover, to satisfy with design requirements of different mobile terminals, the annular structure may have a square shape, a circular shape or an oval shape.

In some embodiments, the inner side of the casing corresponding to the touch area includes a second concavity, the sensing identification module is arranged within the second concavity. Thus, the casing thickness of the area where the sensing identification module is arranged is effectively reduced, and the signal strength between the touch area and the sensing identification module when the user is pressing or touching the touch area, is strengthened, therefore the data collection of the sensing identification module is further facilitated, and the user's experience is improved. In addition, in order to satisfy with the actual requirement for assembly and design, the second concavity is concave plane or concave arc surface.

Moreover, the touch area is located at a bottom, a front or a side of the casing. The casing is a plastic housing.
Fig. 1 is a structure diagram of a mobile terminal according to the first embodiment of the present application;
Fig. 2 is a structure diagram of the first embodiment of the present application in which the annular structure is an annular projection structure;
Fig. 3 is a structure diagram of the first embodiment of the present application in which the annular structure is an annular groove structure;
Fig. 4 is a structure diagram of the first embodiment of the present application in which the annular structure is square;
Fig. 5 is a structure diagram of the first embodiment of the present application in which the annular structure is circular;
Fig. 6 is a structure diagram of the first embodiment of the present application in which the annular structure is oval;
Fig. 7 is a structure diagram of the second embodiment of the present application in which the touch area is a concave plane surface;
Fig. 8 is a structure diagram of the second embodiment of the present application in which the touch area is a concave arc surface;
Fig. 9 is a structure diagram of the second embodiment of the present application in which the touch area is a convex plane surface;
Fig. 10 is a structure diagram of a second embodiment of the present application in which the touch area is a convex arc surface;
Fig. 11 and Fig. 13 are structure diagrams of a third embodiment of the present application in which a side of the casing of the mobile terminal fitted with the sensing identification module, is a concave plane.
Fig. 12 and Fig. 14 are structure diagrams of a third embodiment of the present application in which a side of the casing of the mobile terminal fitted with the sensing identification module is a concave arc surface.

In order to make the objects, technical solutions and advantages of the present invention clearer, some of embodiments of the present invention will be further described in detail hereinafter with reference to the drawings. However, it should be understood by person skilled in the art that in some embodiments of this patent application, plenty of technical details are described to make this application easier to be understood. However, the technical solutions sought to be protected by the claims of this patent application may be implemented even without the technical details and the changes and modification made based on some of embodiments below.

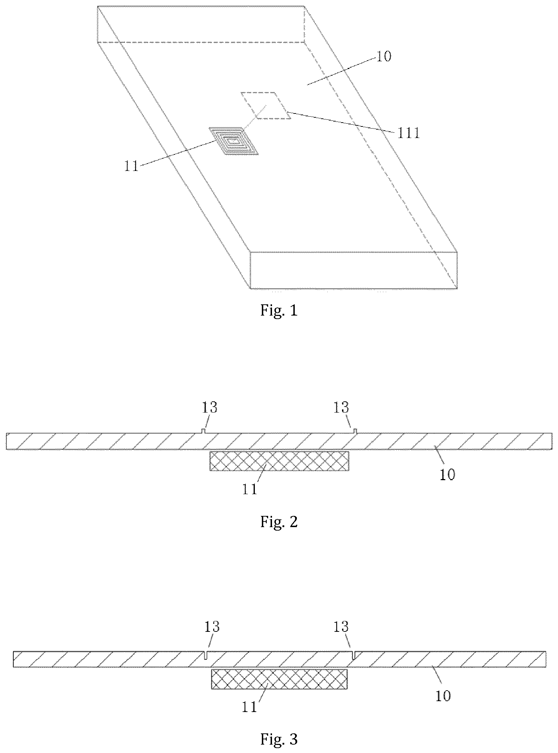

The first embodiment of the present application relates to a mobile terminal, as shown in the Fig. 1 and Fig. 2, the mobile terminal includes a sensing identification module 11. The sensing identification module 11 is arranged within a casing 10 of the mobile terminal. An area of an outer surface of the casing 10 corresponding to the sensing identification module 11 serves as a touch area 111, and at least part of the touch area 111 is concave or convex.

According to the contents mentioned above, it is easy to find out that the sensing identification module 11 is arranged inside of the casing 10 of the mobile terminal, and the area of the outer surface of the casing 10 corresponding to the sensing identification module 11 serves as a touch area 111, so that the sensing identification module 11 may not be exposed to an outside circumstance of the casing 10. Moreover, at least part of the outer surface of the casing 10 corresponding to the touch area 111 is concave or convex; with this configuration, when using the mobile module, a user may quickly find out a location of the touch area 111 on the outer surface of the casing by means of only tactile sense of the finger, which may reduce the difference in visual sense and tactile sense that might otherwise exist due to separate assembly of the sensing identification module 11 while the user performs a press and touch operation on the outer surface of the casing 10, and thus improves the appearance of the whole device and enhances the user's experience. In addition, since no drilling process for forming a hole on the casing to accommodate the sensing identification module is needed, the fabricating procedure of the whole device is reduced and thus the fabricating difficulty is lowered.

In details, in this embodiment, the touch area 111 is actually a sensing projection area, and the sensing projection area may be configured to project information such as a fingerprint, a palm print, a palm vein and the like of the user to the sensing identification module 11 according to a type of the sensing identification module 11. For example, in an embodiment, the sensing identification module 11 may be a fingerprint identification module for detecting fingerprints of a user's finger, and when the touch area 111 is touched or pressed by the user's finger, the sensing projection area may be configured to project the fingerprint information of the user to the sensing identification module 11. A plastic housing may be used as the casing 10, and as the plastic housing has a higher resilience coefficient, the tactile sense when the finger or palm performs a press and touch operation is enhanced, and thus the user's experience is improved. It shall be noted that in this embodiment, the plastic housing used as the casing 10 is just an example for explanation, in actual application, the casing 10 may also employ a glass housing, or other insulating materials for fabrication. The material and type of the casing 10 is not specifically limited.

Furthermore, the touch area 111 has a concave or convex annular structure at its periphery, as shown in Fig. 2 and Fig. 3. As shown in Fig. 2, the touch area 111 may have an annular protrusion structure; or, as shown in the Fig. 3, it may have an annular groove structure. Thus, by means of the annular groove structure and the annular protrusion structure formed on the outer surface of the casing 10, the accuracy for the user's finger pressing or touching the touch area 111 on the outer surface of the casing 10 is increased, and thus the user's experience is improved.

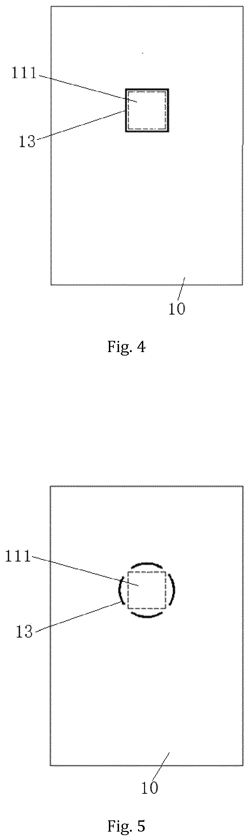

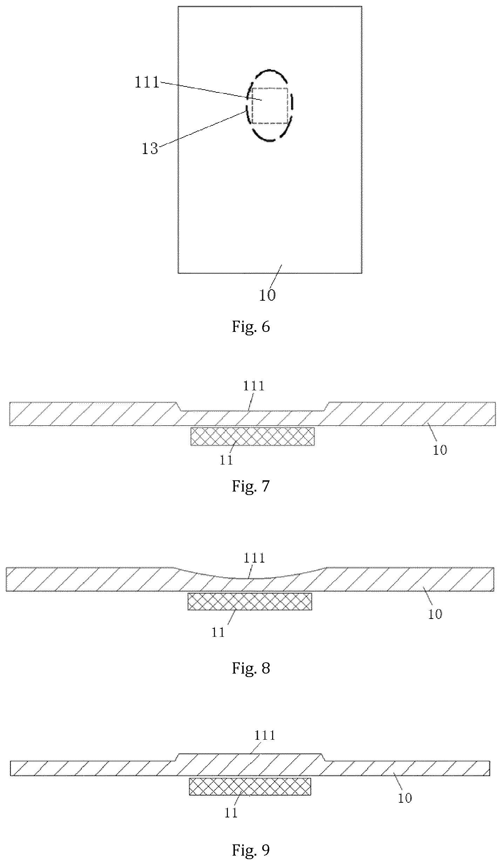

Moreover, to satisfy with the user's use requirements, the annular structure 13 is a continuous annular structure as shown in the Fig. 4. Alternatively, the annular structure 13 is an annular structure with a plurality of breakpoints, as shown in the Fig. 5 and Fig. 6. Moreover, to satisfy with design requirements of different mobile terminals, as shown in the Fig. 4 to Fig. 6, the annular structure 13 may be a square structure, a circular structure or an oval structure. Therefore, when the user presses or touches the touch area 111 located on the outer surface of the casing 10, the annular structure 13 on the casing 10 may be find out directly by finger touching, and the user can thus be aware of the location of the touch area 111 on the casing 10, so that a quick operation to the sensing identification module 11 is achieved.

It shall be noted that in this embodiment, the annular structure 13 is described as a square structure, a circular structure or an oval structure just for illustration, and in actual implementation, the annular structure 13 may also have other shapes according to actual use requirements, thus the shape of the annular structure 13 in this embodiment is not limited thereto. In addition, in this embodiment, the touch area 111 is described as being located at the bottom of the casing 10 just for illustration, i.e. the sensing identification module 11 is described as being arranged at an inner surface corresponding to the bottom of the casing 10 just for illustration, in actual implementation, the sensing identification module 11 may also be located at afront cover or a sidewall of the casing 10, i.e. the sensing identification module 11 may also be arranged at the inner surface corresponding to the front cover or the sidewall of the casing 10, so that the mobile terminal may also realize sensing identification to the user's fingers or palm from a front or aside of the casing, to meet various operation habits of different users.

The second embodiment of the present patent application relates to a mobile terminal and is roughly the same as the first embodiment. The key distinction between the first and second embodiment is that in the second embodiment, the touch area 111 on the casing 10 as a whole is a concavity (namely, a first concavity); the concavity facilitates the user to find out the touch area 111 located on the outer surface of the casing 10 as to realize a quick operation to the sensing identification module 11. Besides, since the touch area 111 is a concavity, it is possible to increase the accuracy of the user's finger pressing or touching the touch area 111 on the outer surface of the casing 10, and thus the user's experience is improved.

Moreover, in order to satisfy with the use habits of different users, the concavity is a concave plane, as shown in the Fig. 7. Alternatively, the concavity is a concave arc surface, as shown in the Fig. 8, so as to satisfy with the use requirements of different users.

In details, when the casing 10 is fabricated, a groove may be formed at a part of the outer surface of the casing 10, which correspond to the sensing identification module 11, so that a grove fitting with the user's finger may be formed on the outer surface of the casing 10. It shall be noted that, in order to ensure that a height difference between the touch area 111 and the outer surface of the casing 10 is not too much to affect the appearance of the whole casing 10, a depth of the groove should be controlled, and the height difference between the outer surface of the casing 10 and a bottom of the groove in a range of 0.1mm to 1mm is desired.

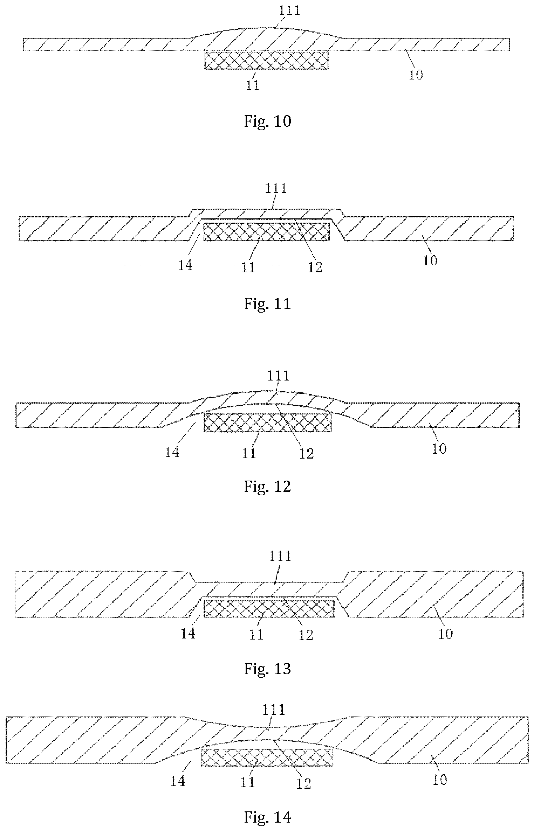

In addition, in an alternative embodiment, the touch area 111 on the casing 10 as a whole is a convexity. In details, the convexity is a convex plane as shown in Fig. 9; or be a convex arc surface as shown in Fig. 10. From the contents mentioned above, it is easy to find out that the touch area 111 of this embodiment may employs a concave structure, or a convex structure, thus both design requirements of different products and the use requirements of different users could be satisfied.

The third embodiment of the present application relates to a mobile terminal, which has a further improvement on the basis of the second embodiment. The main improvement lies in that in this embodiment, as shown in Fig. 11, an inner side of the casing 10 corresponding to the touch area 111 includes a concavity (namely, a second concavity), and the sensing identification module is arranged within the second concavity.

From the contents mentioned above, it is easy to find out that the casing thickness of the area where the sensing identification module 11 is located is effectively reduced by fabricating the portion of the casing 10 fitted with the sensing identification module 11 as the second concavity 12, and thus the signal strength between the touch area 111 and the sensing identification module 11 when the user is pressing or touching the touch area 111 is further strengthened; moreover, data collection of the sensing identification module 11 is facilitated, and thus the user's experience is improved.

Furthermore, in order to satisfy with the use habits of different users, the second concavity 12 may be a concave plane as shown in the Fig. 11, or be a concave arc surface as shown in the Fig. 12, so as to satisfy with actual requirements for assembly and design of different devices. However, it shall be noted that when the second concavity 12 is a concave plane, the sensing identification module 11 may be directly fitted on the concave plane, so as to further reduce the distance between the sensing identification module 11 and the touch area 111, and further strengthen the signal strength between the touch area 111 and the sensing identification module 11 when the touch area 111 is pressed or touched.

Specifically, when the casing 10 is fabricated, a groove may be formed at a part of casing 10 with which the sensing identification module 11 needs to be fitted, so that a groove 14 capable of accommodating the sensing identification module 11 is provided at the inner surface of the casing 10. It shall be noted that in order not to have much affection on the strength of the casing 10 while strengthening the signal strength between the touch area 111 and the sensing identification module 11 after the touch area 11 is pressed, a depth of the groove 14 should be controlled when forming the groove 14 in the inner surface of the casing 10, so that the casing 10 has enough strength after the touch area 111 is pressed by the user, so that a deformation in the casing 10 is avoid.

In addition, in order to strengthen the signal strength between the touch area 111 and the sensing identification module 11 after the touch area 11 is pressed, to a maximum degree, in this embodiment, the touch area 111 may employ the structure mentioned in the second embodiment, as shown in the Fig. 13 to 14. Specifically, the touch area 111 on the casing 10 as a whole is a convexity, so that the thickness of the casing 10 at this portion is reduced, and the distance between the sensing identification module 11 and the touch area 111 is further reduced; thus the signal strength between the touch area 111 and the sensing identification module 11 when the touch area 111 is pressed or touched, is further strengthened, which makes the response of the whole operation faster and more convenient.

## Claims

1. A mobile terminal comprising a sensing identification module (11) and a touch area (111);
wherein the sensing identification module (11) is arranged within a casing (10) of the mobile terminal;
wherein the touch area (111) refers to an area of an outer surface of the casing (10) corresponding to the sensing identification module (11), the sensing identification module (11) is positioned below the touch area (111) and is not exposed outside of the casing (10), and at least part of the touch area (111) is concave or convex;
**characterized in that**, the touch area (111) has an annular structure (13) at a periphery thereof and the annular structure (13) is an annular protrusion structure or an annular groove structure.

2. The mobile terminal according to claim 1, wherein the touch area (111) comprises a first concavity formed at the outer surface of the casing (10), or the touch area (111) comprises a convexity formed at the outer surface of the casing (10).

3. The mobile terminal according to claim 2, wherein
the first concavity is a concave plane or a concave arc surface.

4. The mobile terminal according to claim 2, wherein
the convexity is a convex plane or a convex arc surface.

5. The mobile terminal according to claim 1, wherein the annular structure (13) is a continuous annular structure.

6. The mobile terminal according to claim 1, wherein the annular structure (13) is an annular structure with breakpoint.

7. The mobile terminal according to any one of claims 1 to 6, wherein the touch area (111) further comprises a second concavity (12) formed at an inner side of the casing (10), and the sensing identification module (11) is arranged within the second concavity (12).

8. The mobile terminal according to claim 7, wherein
the second concavity (12) is a concave plane or a concave arc surface.

9. The mobile terminal according to claim 1, wherein the touch area (111) is located at a bottom, a front or a side of the casing (10).

10. The mobile terminal according to any one of claims 1 to 9, wherein the casing (10) is a plastic housing.

11. The mobile terminal according to any one of claims 1 to 9, wherein the casing (10) is a glass housing.

12. The mobile terminal according to any one of claims 1 to 11, wherein the sensing identification module (11) is a fingerprint identification module configured to detect a fingerprint of a user's finger, and the touch area (111) is a sensing projection area for projecting fingerprint information of a user to the sensing identification module (11) when the user touches or presses the touch area (111) by a finger.

13. The mobile terminal according to claim 1, wherein the touch area (111) is a groove (14) formed at the outer surface of the casing (10) and corresponds to the sensing identification module (11), and a height difference between the outer surface of the casing (10) and a bottom of the groove (14) is 0.1mm to 1mm.

## Patentansprüche

1. Mobiles Endgerät, umfassend ein Abtastungsidentifikationsmodul (11) und eine Berührungsfläche (111);
wobei das Abtastungsidentifikationsmodul (11) angeordnet ist innerhalb eines Gehäuses (10) des mobilen Endgeräts;
wobei die Berührungsfläche (111) sich auf eine Fläche einer äußeren Oberfläche des Gehäuses (10) bezieht, die dem Abtastungsidentifikationsmodul (11) entspricht, wobei das Abtastungsidentifikationsmodul (11) unterhalb der Berührungsfläche (111) positioniert ist und nicht außerhalb des Gehäuses (10) exponiert ist, und wobei mindestens ein Teil der Berührungsfläche (111) konkav oder konvex ist;
**dadurch gekennzeichnet, dass** die Berührungsfläche (111) eine ringförmige Struktur (13) an einer Peripherie davon hat und die ringförmige Struktur (13) eine ringförmige Vorsprungstruktur oder eine ringförmige Rillenstruktur ist.

2. Mobiles Endgerät nach Anspruch 1, wobei die Berührungsfläche (111) eine erste Konkavität umfasst, gebildet an der äußeren Oberfläche des Gehäuses (10) oder wobei die Berührungsfläche (111) eine Konvexität umfasst, gebildet an der äußeren Oberfläche des Gehäuses (10).

3. Mobiles Endgerät nach Anspruch 2, wobei
die erste Konkavität eine konkave Ebene oder eine konkave Bogenoberfläche ist.

4. Mobiles Endgerät nach Anspruch 2, wobei
die Konvexität eine konvexe Ebene oder eine konvexe Bogenoberfläche ist.

5. Mobiles Endgerät nach Anspruch 1, wobei die ringförmige Struktur (13) eine kontinuierliche ringförmige Struktur ist.

6. Mobiles Endgerät nach Anspruch 1, wobei die ringförmige Struktur (13) eine ringförmige Struktur mit Bruchstelle ist.

7. Mobiles Endgerät nach einem der Ansprüche 1 bis 6, wobei die Berührungsfläche (111) weiter eine zweite Konkavität (12) umfasst, gebildet an einer inneren Seite des Gehäuses (10) und wobei das Abtastungsidentifikationsmodul (11) innerhalb der zweiten Konkavität (12) angeordnet ist.

8. Mobiles Endgerät nach Anspruch 7, wobei
die zweite Konkavität (12) eine konkave Ebene oder eine konkave Bogenoberfläche ist.

9. Mobiles Endgerät nach Anspruch 1, wobei die Berührungsfläche (111) an einem Boden, einer Vorderseite oder einer Seite des Gehäuses (10) lokalisiert ist.

10. Mobiles Endgerät nach einem der Ansprüche 1 bis 9, wobei das Gehäuse (10) ein Plastikgehäuse ist.

11. Mobiles Endgerät nach einem der Ansprüche 1 bis 9, wobei das Gehäuse (10) ein Glasgehäuse ist.

12. Mobiles Endgerät nach einem der Ansprüche 1 bis 11, wobei das Abtastungsidentifikationsmodul (11) ein Fingerabdruckidentifikationsmodul ist, eingerichtet, um einen Fingerabdruck eines Fingers eines Benutzers zu detektieren; und wobei die Berührungsfläche (111) eine Abtastprojektionsfläche zum Projizieren von Fingerabdruckinformationen eines Benutzers an das Abtastidentifikationsmodul (11) ist, wenn der Benutzer die Berührungsfläche (111) mittels eines Fingers berührt oder drückt.

13. Mobiles Endgerät nach Anspruch 1, wobei die Berührungsfläche (111) eine Rille (14) ist, gebildet an der äußeren Oberfläche des Gehäuses (10), und dem Abtastungsidentifikationsmodul (11) entspricht, und eine Höhendifferenz zwischen der äußeren Oberfläche des Gehäuses (10) und einem Boden der Rille (14) 0,1 mm bis 1 mm ist.

## Revendications

1. Terminal mobile comprenant un module d'identification à détection (11) et une région tactile (111) ;
dans lequel le module d'identification à détection (11) est agencé à l'intérieur d'un boîtier (10) du terminal mobile ;
dans lequel la région tactile (111) fait référence à une région d'une surface externe du boîtier (10) correspondant au module d'identification à détection (11), le module d'identification à détection (11) est positionné en dessous de la région tactile (111) et n'est pas exposé à l'extérieur du boîtier (10), et au moins une partie de la région tactile (111) est concave ou convexe ;
**caractérisé en ce que** la région tactile (111) comporte une structure annulaire (13) au niveau d'une périphérie de celle-ci et la structure annulaire (13) est une structure en saillie annulaire ou une structure en rainure annulaire.

2. Terminal mobile selon la revendication 1, dans lequel la région tactile (111) comprend une première concavité formée au niveau de la surface externe du boîtier (10), ou la région tactile (111) comprend une convexité formée au niveau de la surface externe du boîtier (10).

3. Terminal mobile selon la revendication 2, dans lequel
la première concavité est un plan concave ou une surface arquée concave.

4. Terminal mobile selon la revendication 2, dans lequel
la convexité est un plan convexe ou une surface arquée convexe.

5. Terminal mobile selon la revendication 1, dans lequel la structure annulaire (13) est une structure annulaire continue.

6. Terminal mobile selon la revendication 1, dans lequel la structure annulaire (13) est une structure annulaire à point d'arrêt.

7. Terminal mobile selon l'une quelconque des revendications 1 à 6, dans lequel la région tactile (111) comprend en outre une seconde concavité (12) formée au niveau d'un côté interne du boîtier (10), et le module d'identification à détection (11) est agencé à l'intérieur de la seconde concavité (12).

8. Terminal mobile selon la revendication 7, dans lequel
la seconde concavité (12) est un plan concave ou une surface arquée concave.

9. Terminal mobile selon la revendication 1, dans lequel la région tactile (111) est située au niveau d'un fond, d'un avant ou d'un côté du boîtier (10).

10. Terminal mobile selon l'une quelconque des revendications 1 à 9, dans lequel le boîtier (10) est un logement en plastique.

11. Terminal mobile selon l'une quelconque des revendications 1 à 9, dans lequel le boîtier (10) est un logement en verre.

12. Terminal mobile selon l'une quelconque des revendications 1 à 11, dans lequel le module d'identification à détection (11) est un module d'identification d'empreinte digitale configuré pour détecter une empreinte digitale d'un doigt d'un utilisateur, et la région tactile (111) est une région de projection de détection pour projeter des informations d'empreinte digitale d'un utilisateur sur le module d'identification à détection (11) lorsque l'utilisateur touche ou appuie sur la région tactile (111) avec un doigt.

13. Terminal mobile selon la revendication 1, dans lequel la région tactile (111) est une rainure (14) formée au niveau de la surface externe du boîtier (10) et correspond au module d'identification à détection (11), et une différence de hauteur entre la surface externe du boîtier (10) et un fond de la rainure (14) est de 0,1 mm à 1 mm.
